# EUROPEAN PATENT APPLICATION

(11) **EP 4 589 252 A1**
(43) Date of publication of application: **23.07.2025**
(21) Application number: 24152494.1
(22) Date of filing: 17.01.2024
(51) Int. Cl.: G01C 15/00, G01C 15/06, G01C 21/16

(54) **METHOD AND SYSTEM FOR TRACKING A POSITION AND AN ORIENTATION OF A TARGET OBJECT VIA SENSOR FUSION**

(71) Applicant: Hilti Aktiengesellschaft, 9494 Schaan (LI)
(72) Inventor: Bellusci, Giovanni, 9470 Buchs (CH); Gogolla, Torsten, 9494 Schaan (LI); Winter, Andreas, 6800 Feldkirch (AT); Helmberger, Michael, 6700 Bludenz (AT)
(74) Representative: Hilti Aktiengesellschaft Corporate Intellectual Property

(57) **Abstract**

Computer-implemented method for tracking a position and an orientation of a target object in a worksite, in which the target object and a surveying instrument configured to emit a tracking light and measure a position of the tracked target object are deployed, the method being performed by a computer system and comprises:
▪ Predicting a position and an orientation of the target object with respect to a previous position and a previous orientation by integrating in time of a 3D acceleration measured by an accelerometer sensing unit and of a 3D angular velocity measured by a gyroscope sensing unit, the accelerometer sensing unit and gyroscope sensing unit being attached to the target object,
▪ Correcting at least once the predicted position and orientation by using a first position of the target object measured by the surveying instrument, and
▪ Further correcting over time, the corrected position and orientation with any of a further position of the target object measured in time by the surveying instrument and an incident angle measured in time by a first sensor, the first sensor being attached to the target object.

## Description

The present invention relates to a computer-implemented method for tracking a position and an orientation of a target object according to the definition of claim 1, to a computer program according to the definition of claim 2, and to an apparatus for tracking a position and an orientation of a target object according to the definition of claim 3.

### Background of the invention

In surveying applications, the measurement taken by a total station does not directly correspond to the target point to be surveyed. Current practice is to mount the reflector on a pole and ensure the pole is perfectly vertical over the point of interest and compensate the position for the length of the pole. Levelling the pole, however, takes time and it would be desirable to take measurements of the target position without the need to level the pole.

However, the location of interest to the surveyor is not at the reflector, but at a point on the ground; the reflector is usually mounted on a pole to optimize the reception of reflected signals. Unless the pole is perfectly upright with respect to the ground, the horizontal position of the reflector will be offset compared to the location on the ground of interest. A levelling device, whether a traditional spirit level or a more sophisticated arrangement of sensors, can be used to determine if a pole is upright to some degree of tolerance sufficient to take a measurement. Alternatively, if one can precisely measure the angular orientation (the "attitude") of the pole, this error can be compensated for, assuming one knows the length of the pole.

Measuring the angle of the pole with respect to the ground is not a trivial exercise. Whilst measuring the angle of the pole from the vertical (the pitch and roll) can be accurately achieved through a number of methods (notably, measurement of local gravity using accelerometers or inclinometers), measuring the orientation of the pole with respect to True North (the yaw or azimuth) is considerably more difficult.

### Summary of the invention

Therefore, what is desired is a method and a system for tracking a position and an orientation of a target object without the need to level a pole.

These objectives are achieved by realizing the features of the independent claims. Features which further develop the invention in an advantageous manner are described in the dependent claims.

According to an aspect of the present invention, there is provided a computer-implemented method for tracking a position and an orientation of a target object in a worksite, in which the target object and a surveying instrument configured to emit a tracking light and measure a position of the tracked target object are deployed. The method is performed by the computer system and comprises the steps:
▪ Predicting a position and an orientation of the target object with respect to a previous position and previous orientation by integrating in time of a 3D acceleration measured by an accelerometer sensing unit and of a 3D angular velocity measured by a gyroscope sensing unit, the accelerometer sensing unit and gyroscope sensing unit being attached to the target object,
▪ Correcting at least once the predicted position and orientation by using a first position of the target object measured by the surveying instrument, and
▪ Further correcting over time, the corrected position and orientation with any of a further position of the target object measured in time by the surveying instrument and an incident angle measured in time by a first sensor, the first sensor being attached to the target object.

According to a further aspect of the present invention, there is provided a computer program comprising instructions, which, when executed by a computer system, cause the computer system to carry out the method according to the present invention.

The computer program may be stored on the computer system or on a computer-readable medium communicatively connected to the computer system. The term "computer-readable medium" includes, but is not limited to, portable or non-portable storage devices, optical storage devices, and various other mediums capable of storing, containing, or carrying instruction(s) and/or data.

According to a further aspect of the present invention, there is provided an apparatus comprising means for carrying out the method according to the present invention. The apparatus comprises:
▪ a surveying instrument configured to emit a tracking light and to measure a position of the tracked target object,
▪ a first sensor attached to the target object and configured to measure an incident angle of the tracking light from the surveying instrument,
▪ an accelerometer sensing unit attached to the target object and configured to measure a 3D acceleration in time,
▪ a gyroscope sensing unit attached to the target object and configured to measure a 3D angular velocity in time, and
▪ a computer system.

### Brief Description of the drawings

The aspects of the invention are described or explained in more detail below, purely by way of example, with reference to working examples shown schematically in the drawing. Identical elements are labelled with the same reference numerals in the figures. The described embodiments are generally not shown true in scale, and they are also not to be interpreted as limiting the invention. Specifically,
- FIG. 1: shows an operator using a surveying instrument deployed at a worksite, the surveying instrument comprising a measuring unit mounted on a tripod and a remote controller connected via a communication link to the measuring unit,
- FIGS. 2A, B: show an exemplary version of the measuring unit used in the surveying instrument of FIG. 1 (FIG. 2A) and a block diagram of the main components of the surveying instrument (FIG. 2B),
- FIGS. 3A, B: show an exemplary version of the remote controller used in the surveying instrument of FIG. 1 (FIG. 3A) and a block diagram of the main components of the remote controller as illustrated in FIG. 3A (FIG. 3B), and
- FIG. 4: shows an exemplary version of a method for tracking a position and an orientation of a target object according to the present invention in a flow chart.

### Detailed Description

Reference will now be made in detail to the present preferred embodiment, an example of which is illustrated in the accompanying drawings. It is to be understood that the technology disclosed herein is not limited in its application to the details of construction and the arrangement of components set forth in the following description or illustrated in the drawings.

The technology disclosed herein is capable of other embodiments and of being practiced or of being carried out in various ways.

Also, it is to be understood that the phraseology and terminology used herein is for the purpose of description and should not be regarded as limiting. All definitions, as defined and used herein, should be understood to control over dictionary definitions, definitions in documents incorporated by reference, and/or ordinary meanings of the defined terms.

The use of "including, or "comprising, or "having" and variations thereof herein is meant to encompass the items listed thereafter and equivalents thereof as well as additional items. Unless limited otherwise, the terms "connected", "coupled", and "mounted", and variations thereof herein are used broadly and encompass direct and indirect connections, couplings, and mountings. In addition, the terms "connected" and "coupled", and variations thereof are not restricted to physical or mechanical connections or couplings.

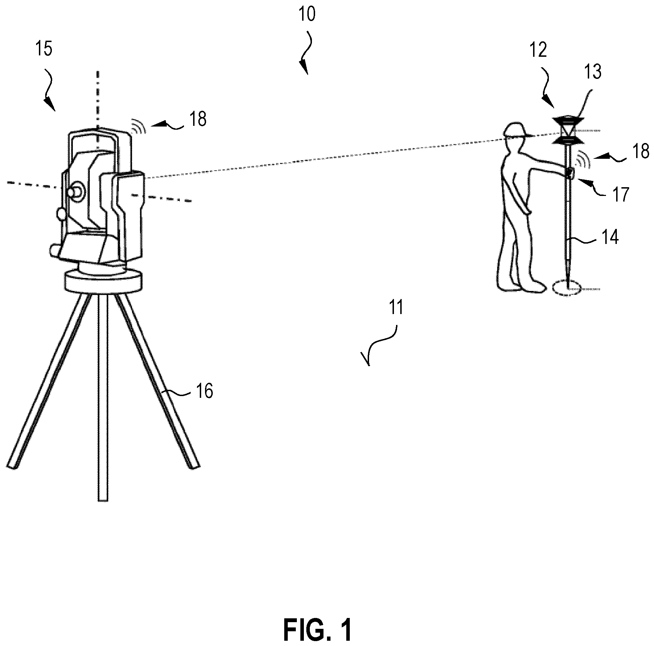

**FIG. 1** shows an operator using a surveying instrument **10** deployed at a worksite **11.** The worksite 11 may be a construction site, inside or outside, or a surveying site, amongst others. In addition to the surveying instrument 10, a target object **12** that is remote from the surveying instrument 10 is deployed at the worksite 11. The target object 12 can include a reflector **13,** such as a prism and/or a cat-eye, that is mounted on top of a pole **14.**

The pole 14 comprises a body having a pointer tip for contacting a measuring point and the reflector 13 for making available the coordinative determination of a referenced position. The reflector 13 is placed on the body of the pole 14 with a defined spatial relationship relative to the tip. The pole further comprises an inertial measuring unit (IMU) that is placed on the body with a defined spatial relationship relative to the reflector and comprises IMU-sensors including an accelerometer sensing unit, a gyroscope sensing unit, and a first sensor. The accelerometer sensing unit is attached to the target object 12 and configured to measure a 3D acceleration in time, the gyroscope sensing unit is attached to the target object 12 and configured to measure a 3D angular velocity in time, and the first sensor is attached to the target object 12 and configured to measure an incident angle of a tracking light emitted by the surveying instrument.

The surveying instrument 10 is formed as a total station and comprises a measuring unit **15** that is mounted on a mounting support structure in the form of a tripod **16.** The surveying instrument 10 also comprises a removable control panel in the form of a remote controller **17** that can be used for remote control of the measuring unit 15 via a wireless connection **18.**

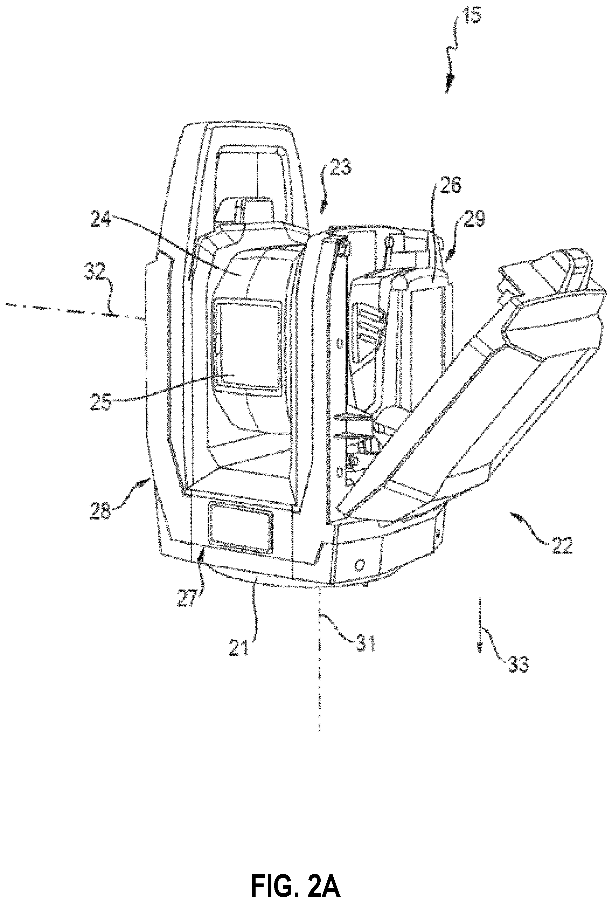

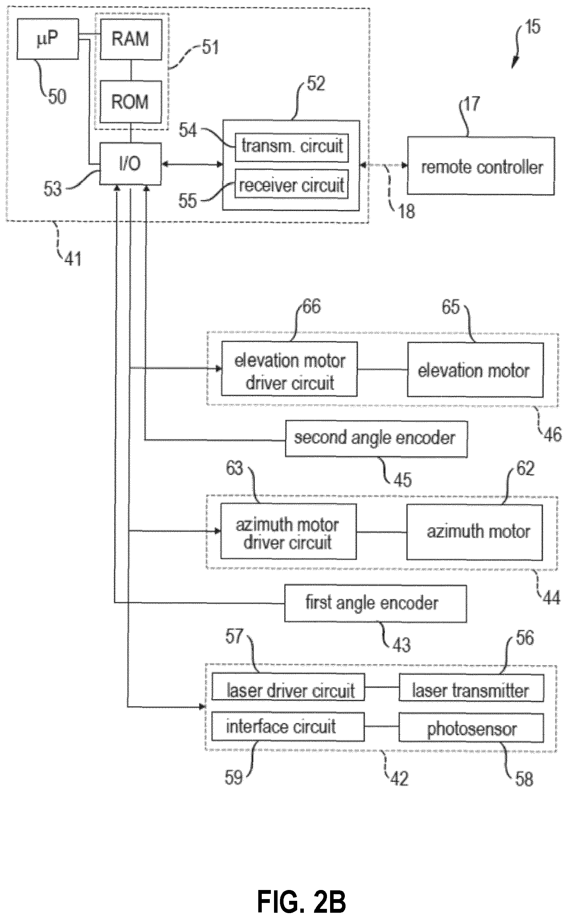

**FIGS. 2A****, B** show an exemplary version of the measuring unit 15 used in the surveying instrument 10 of FIG. 1 in a perspective view (FIG. 2A) and a block diagram of the main components of the measuring unit 15 as illustrated in FIG. 2A (FIG. 2B).

The surveying instrument 10 is designed as robotic total station and the measuring unit 15 comprises a base **21,** a support **22,** and a measuring head **23.** The measuring head 23 is enclosed by a housing **24,** which includes an exit window **25.** In the housing 24, a distance measuring device that can emit a distance measuring beam and a tracking device that can emit a radiation are arranged. The distance measuring beam and the radiation are emitted through the exit window 25 to leave the housing 24.

In the exemplary version of FIG. 2A, the support 22 is U-formed and includes a bottom portion **27,** a first side portion **28,** and a second side portion **29.** The support 22 can rotate completely around its circumference at a full 360° angle with respect to the base 21 about a first axis of rotation **31.** The measuring head 23 is pivotably mounted to the support 22 about a second axis of rotation **32** and is arranged between the first side portion 28 and the second side portion 29 of the support. Usually, the first axis of rotation 31 is aligned parallel to a local direction of gravitation **33,** and the second axis of rotation 32 is aligned perpendicular to the local direction of gravitation 33.

An azimuth motor device and a first angle encoder may be located in the bottom portion 27 of the support 22 and allow to rotate the measuring unit 15 about the first axis of rotation 31 and to determine the direction of the distance measuring beam in a first plane perpendicular to the first axis of rotation 31. An elevation motor device and a second angle encoder may be located in the first side portion 28 of the support 22 and allow the measuring head 23 to pivot about the second axis of rotation 32 and to determine the direction of the distance measuring beam in a second plane perpendicular to the second axis of rotation 32. To make the instrument 12 fully automatic, a self-leveling device, which may be arranged in the bottom portion 27 of the support 22, can be included.

FIG. 2B shows a block diagram of the main components of the measuring unit 15 of the surveying instrument 10. The measuring unit 15 includes a first electronic device **41,** a distance measuring device **42,** a first angle encoder **43,** an azimuth motor device **44,** a second angle encoder **45,** and an elevation motor device **46.** Optionally, the measuring unit 15 can additionally include one or more cameras, such as a tracking camera configured to track a target object, or an aiming camera configured to let the user aim to a point of interest.

In order to track a target object, such as the target object 12 in FIG. 1 automatically via the total station 10, the total station 10 can include a tracking camera and a tracking light source that emits tracking light. The tracking camera is used to enable measuring to static reflective targets and tracking of moving reflective targets. The tracking camera gives information about the center of gravity of a target and this information is used to steer the drive system to direct the distance measuring beam on the center of the target and to measure the 3D coordinates of the target. In order to track reflective targets in all ambient lighting conditions, even in darkness, the tracking light source is used to produce the necessary illumination for the tracking camera. The tracking camera should have a filter that fits to the wavelength of the tracking light source.

The first electronic device 41 comprises a first processing circuit (µP) **50,** a first memory circuit **51** that may include associated random-access memory (RAM) and read only memory (ROM), a first communications circuit **52,** and a first input/output (I/O) interface circuit **53.** The first processing circuit 50, also called device control unit, may communicate with the first memory circuit 51 and first communications circuit 52 and is configured to control the laser instrument 12. The first communications circuit 52 includes a first transmitter circuit **54** and a first receiver circuit **55** and is configured to be connected to a communications circuit of the remote controller via the communication link. The first input/output interface circuit 53 is an interface between the first processing circuit 50 and the various types of motor driver circuits and sensor circuits of the measuring unit 15.

The distance measuring device 42 includes a laser transmitter **56,** a laser driver circuit **57,** a photosensor **58,** and a laser receiver interface circuit **59.** The laser driver circuit 57 provides current for the laser transmitter 56 which emits a distance measuring beam. The photosensor 58 receives at least a part of the distance measuring beam reflected at a target or a surface of the worksite, and the current signal that is outputted by the photosensor 58 is directed to the laser receiver interface circuit 59. After appropriate amplification and demodulation, the signal is sent via the first input/output interface circuit 53 to the first processing circuit 50.

The first angle encoder 43 provides input signals to the first processing circuit 50, so that it knows exactly in which horizontal angle the laser transmitter 56 is arranged in the horizontal plane; the output signal of the first angle encoder 43 is directed to the first input/output interface circuit 53. The azimuth motor device 44 includes an azimuth motor **62,** which is the motive force to rotate the main housing 22 of the measuring unit 15 about the first axis of rotation 31, and an azimuth motor driver circuit **63,** which will provide the proper current and voltage to drive the azimuth motor 62.

The second angle encoder 45 provides input signals to the first processing circuit 50, so that it knows exactly in which second angle the laser transmitter 56 is arranged in the second plane; the output signal of the second angle encoder 45 is directed to the first input/output interface circuit 53. The elevation motor device 46 includes an elevation motor **65,** which is the motive force to pivot the measuring head 23 about the second axis of rotation 32, and an elevation motor driver circuit **66,** which will provide the proper current and voltage to drive the elevation motor 65.

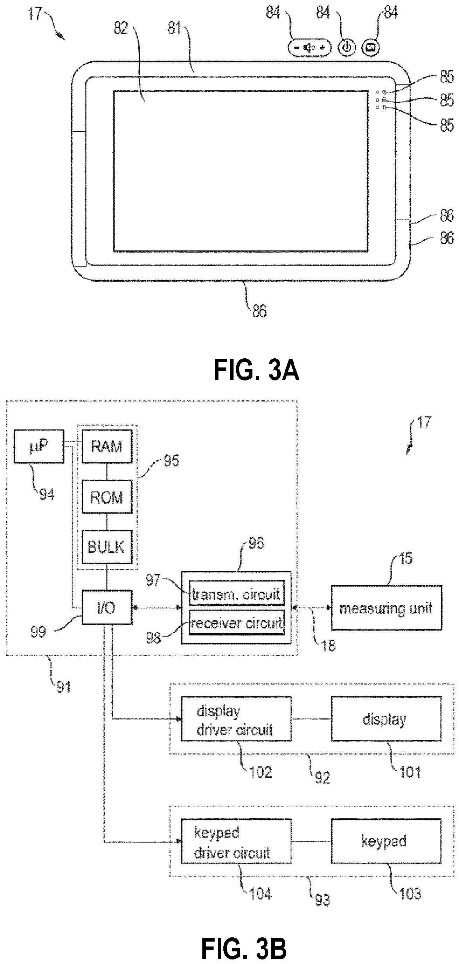

**FIGS. 3A****, B** show an exemplary version of the remote controller 17 used in the surveying instrument 10 of FIG. 1 in a front view (FIG. 3A) and a block diagram of the main components of the remote controller 17 as illustrated in FIG. 3A (FIG. 3B).

The remote controller 17 is designed as tablet computer and includes a housing **81,** a touch screen display **82,** a battery **83,** a set of buttons **84,** e.g., volume control button, power on/off button, and display control button, a set of indicators **85,** e.g., for operating status, data storage status, and battery status, a set of connectors **86,** e.g., for docking, data storage, and USB, and a card slot **87.**

FIG. 3B shows a block diagram of the main components of the remote controller 17. The remote controller 17 may include a second electronic device **91,** a display device **92,** and an input device **93.**

The second electronic device 91 comprises a second processing circuit (µP) **94,** a second memory circuit **95** that may include associated random-access memory (RAM), read only memory (ROM), and some type of bulk memory (BULK), a second communications circuit **96,** and a second input/output (I/O) interface circuit **97.** The second processing circuit 94 may communicate with the second memory circuit 95 and second communications circuit 96 and is configured to control the remote controller 17. The second communications circuit 96 includes a second transmitter circuit **98** and a second receiver circuit **99** and is configured to be connected to the first communications circuit 52 of the measuring unit 15 via the wireless communication 18. The second input/output interface circuit 97 is an interface between the second processing circuit 94 and the various driver circuits of the remote controller 17.

In the second memory circuit 95 several program codes having computer-executable instructions for performing a method may be stored. The stored program codes may include a program code for performing a method for tracking a position and an orientation of a target object.

The method for tracking a position and an orientation of a target object is performed by a computer system having evaluation, data processing and/or control functionality. In the exemplary version of the surveying instrument 10, the computer system is integrated into the second processing circuit 94 of the second electronic device 91 of the remote controller 17. Alternatively, the computer system may be integrated into the first processing circuit 50, or into the first and second processing circuits 50, 94, or in any other type of suitable processing circuit.

The display device 92 includes a display **101** and a display driver circuit **102.** The display driver circuit will be in communication with the second I/O interface circuit 97 and provides the correct interface and data signals for the display 101. If the remote controller 17 is a laptop computer, for example, then this would be the standard display seen in most laptop computers. Or, if the remote controller 17 is a tablet computer or a smart phone, in which case the display device is a much smaller physical device, the display device 101 could be a touch screen display.

The user-operated input device 93 includes a keypad **103** and a keypad driver circuit **104.** The keypad driver circuit will be in communication with the second I/O interface circuit 97 and controls the signals that interface to the keypad 103. If the display device 101 is a touch screen display, then there may not be a separate keypad on the remote controller 17, because most of the command or data to input functions will be available by touching the display itself and the keypad is integrated in the touch screen display. There may be some type of power on/off button, but that would not necessarily be considered a true keypad and typically would not be used for entering data.

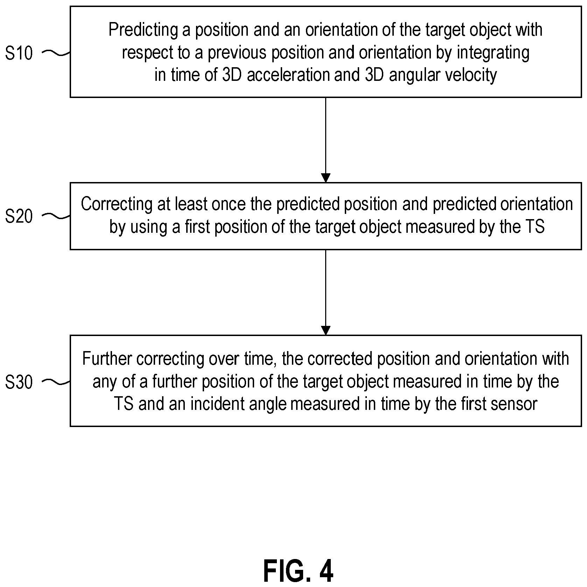

**FIG. 4** shows an exemplary version of a method for tracking a position and an orientation of a target object according to the present invention in a flow chart. The method is performed by the computer system and comprises the following steps:
▪ Predicting a position and an orientation of the target object 12 with respect to a previous position and a previous orientation by integrating in time of a 3D acceleration measured by an accelerometer sensing unit and of a 3D angular velocity measured by a gyroscope sensing unit, the accelerometer sensing unit and gyroscope sensing unit being attached to the target object 12 (step **S10),**
▪ Correcting at least once the predicted position and predicted orientation by using a first position of the target object 12 measured by the surveying instrument 10 (step **S20),** and
▪ Further correcting over time, the corrected position and corrected orientation with any of a further position of the target object 12 measured in time by the surveying instrument 10 and an incident angle measured in time by a first sensor, the first sensor being attached to the target object 12 (step **S30).**

The apparatus according to the present invention includes a target object, such as a prism, to be tracked in space, a total station (TS) measuring the position of the prism, and an IMU (3D accelerometer and 3D gyroscope sensors) attached to the prism. In a preferred version, a further sensor system, e.g., camera sensor plus ultra fisheye lens, may be attached to the prism. The latter may be capable to measure an incident angle of light emitted by the total station (e.g., standard infrared flash used for prism tracking) towards the prism. In a further preferred version, the further sensor system may be configured to perform visual odometry using natural features from the worksite.

The 3D gyroscope and 3D accelerometer measure the angular velocity and acceleration of the target object attached to, respectively; these measurements are given in the so called (rotating) sensor frame. For tracking of position and orientation, the accelerometer and gyroscope signals are typically used to perform the so called "strapdown integration" or inertial dead reckoning. Strapdown integration is a well-known method in other domains, as navigation and guidance applications. By dead reckoning, it is possible to integrate the IMU signals in a non-rotating frame of reference (external to the IMU) and calculate a new position and orientation (in an external reference frame) starting from a previous position and orientation. However, to calculate an actual position, the gravity vector (measured by the accelerometer) needs to be first removed, to integrate only the so-called free acceleration (acceleration vector rotated in the local (gravity referenced) reference frame with the gravity component subtracted from it) into an actual velocity and position.

Relevant to observe that even when gravity is perfectly subtracted, dead reckoning alone will lead to a growing drift over time, due to the integral operation being very susceptible to sensor noises and other non-idealities. For this reason, dead reckoning alone would provide an accurate estimate only for short periods of time.

When drift free orientation and position tracking is of interest, dead reckoning of IMU signals is therefore combined with aiding measurement updates with so-called sensor fusion approaches. Sensor fusion is typically performed in a statistical estimation framework (e.g., filtering techniques as the well-known Kalman filter), where states of interest (e.g. position and orientation of the tracked target object) are not measured directly; instead, they are defined as states and estimated via statistical methods using a diversity of (noisy) measurements, for which a statistical characterization is provided.

For example, by initializing position and orientation states to an arbitrary value with large uncertainty, it is possible to start performing IMU strapdown integration (also called prediction in sensor fusion frameworks) in an arbitrary, but non-rotating frame. The solution will keep predicting a position and orientation (with growing uncertainty) simply continuing the dead reckoning process. When a first position measurement (with associated a certain measurement uncertainty) from an aiding technology as the total station is available, this measurement will be used to correct the predicted position with an actual measured position. This will bring the estimated position (the tracked state) to a value very close to the ground truth (and reduce the initial uncertainty accordingly).

There are several benefits in performing sensor fusion using dead reckoning prediction and measurement updates versus using directly a measurement (e.g., estimating a tracked position versus using the total station position directly). These include higher resolution: a position is available at any time an IMU sample is available and IMU sampling can be as high as several thousand Hz (vs total station measurement in the order of tens of Hz). Additionally, a position estimate is available also in case a total station measurement is momentarily not available, e.g., in case of obstruction of line of sight for a short amount of time. Moreover, since the sensor fusion performs a sort of averaging between measurements, a higher accuracy compared to a single measurement can be achieved. Additionally, since a prediction of the tracked position is always available (with associated uncertainty), measurements which contain outliers (e.g., in case total station would lock on a false target) can be detected and removed. Another important benefit is that given the complementary nature of sensed data combined together, it is generally possible to statistically model and estimate additional states as sensor errors (e.g., accelerometer/gyroscope biases or gain errors), measurement update offsets (e.g., prism constants etc.), axes misalignments, etc.

Furthermore, when using so-called tightly coupled sensor fusion frameworks (i.e., frameworks where all the different states and measurements are statistically correlated together), correcting the position state with a position update, will additionally correct the components of orientation perpendicular to the horizontal plane (usually called inclination, or roll and pitch angles). One can intuitively see this by thinking that the moment a position is known, also orientation with respect to gravity (i.e., inclination) will be known, allowing to correctly subtract the gravity and to properly integrate the measured accelerometers signals into position; which on the other hand, should (statistically) match the measured position. If the inclination would not be correct, there would be a big residual error in subtracting gravity before integrating the measured acceleration into position, leading to big position errors via accelerometer integration (vs the measured position provided by total station).

It is noted that the above consideration holds independently of the movement of the prism (e.g., holds also when the prism is static), but would only allow to observe the inclination component of orientation.

Using similar arguments as above, one can see that in case the prism undergoes a further external acceleration with a component along the horizontal plane (e.g., as typical during walking with a prism towards a layout point), such acceleration will render the **heading** (also called yaw, i.e., the component of orientation projected on the horizontal plane with respect to gravity) component of orientation known, at time the sensor fusion framework will receive a position measurement update. For this reason, under these circumstances, the desired full 6 degrees of freedom (6DOF, 3D orientation + 3D position) pose of the prism will be generally known (allowing to perform the desired operations for the application, as pole tilt compensation). From this moment on, one can continue dead reckoning in time by further integration of accelerometer and gyroscope signals, until further position measurement updates from the total station would be available.

While there could be many ways of performing the sensor fusion (as e.g., Kalman filtering techniques), in a preferred embodiment, the employed sensor fusion is based on convex, non-linear optimization. This approach presents a few benefits, when compared to so called "Divided Difference Filtering" which generally belongs to filtering techniques. One first benefit is the possibility of adopting in our optimization problem arbitrary noise distributions rather than the usual Gaussian assumption. For example, measurements from the total station could be modeled with e.g., Student-T distribution, which belongs to so called heavy tailed distributions. The main benefit of this approach is in offering implicit robustness to outliers (inherently captured by the long tail distribution), reducing the need for complex tuning and outlier rejection schemes. Another key benefit is the possibility of modeling fixed or slow varying parameters as constant, rather than as slow varying time processes as Gauss-Markov or Random Walk processes, leading to better estimation performance. Additionally, since the framework is based on non-linear optimization, it is possible to employ the same framework for real time applications or for off-line applications. The latter can be relevant to estimate relevant parameters (e.g., axes misalignments) in an initial calibration run, and then take these parameters as constant for the real time application, using the same sensor fusion framework and formulation.

Another important benefit is the possibility of formulating the optimization problem as Moving Horizon estimation, which allows for real-time or quasi real time estimation, while using for the optimization problem a window of data in time. Moving Horizon Estimation is known to provide significant benefits to improve robustness of the estimate, compared to filtering techniques. It is further noted that when formulating the problem as moving horizon estimation, the optimization problem may be sparse in nature, for which efficient algebraic implementations are available, e.g., Suite sparse, reducing the requirements for implementations on resource constrained platforms.

It is further observed that when employing tightly coupled sensor fusion frameworks, it is of outmost importance to have precise synchronization and timing among the different data. One can imagine that when the prism would move at 1m/s (regular walking speed), only 10ms delay among measurements would result in inconsistencies of 1cm between the different data. This is especially problematic in tightly coupled sensor fusion frameworks, since these errors will then be attributed in rather counterintuitive way to the different tracked states (e.g., inclination could be impacted).

To counteract the above limitation, in one embodiment the different data are timed together with inaccuracies less than 1 ms to reduce possible resulting errors. Note that one benefit of the sensor fusion approach is that data do not need to come to the same instants; however, it is important that they do share a common time reference frame (e.g., via timestamping) with errors as above.

In a different embodiment, however, the time misalignment could be modeled statistically and estimated in the sensor fusion framework as well. Our preferred approach based on nonlinear optimization is of great benefit to the purpose especially when timing errors present themselves as unknown constant offsets, since, as explained before, these offsets can be naturally modeled in the optimization approach.

However, there could be some applications in which higher performance is desired (e.g. in low dynamics or quasi static applications, where heading might not be precisely observed with before disclosed embodiment).

To avoid the above limitation of need for prism movement, in a further embodiment, we propose a system containing additional means to directly measure a heading angle with respect to a total station. As an example, we propose to additionally use a camera sensor combined with wide angle lens. In a specific embodiment this could be a super fisheye lens (with e.g., FOV of 270 degrees or similar). In a preferred embodiment, this camera could be sensitive to infrared light emitted by the flashlight.

Due to the large field of view, it will be generally possible to record on the camera sensor the incident angle the flashlight comes from. Since the inclination of the camera with respect to gravity is known (since the inclination of the prism is known, see arguments above), it is generally possible to know the heading direction of the recorded flashlight. This measurement can then be further used in the sensor fusion estimation framework to correct the heading component of the orientation state. In this way, heading will be always observable, also in completely static conditions (where IMU plus total station only would not give heading observability).

The proposed solution allows therefore always and robustly track both the position and the orientation of the prism in the coordinate frame of the total station.

Important to note that the position update and heading update do not need to be performed at same time, although the measurements need to be expressed in a common time reference frame. In fact, upon receiving a measurement update (e.g., a position measurement update), the position and orientation of the prism can be calculated over time by further dead reckoning of IMU signals (prediction). This can be done at frequencies as high as a kHz or so, since IMU can be sampled at such frequencies. Whenever available, additional position or heading measurements from the total station can be used to further correct the dead-reckoned solution.

The above-described point is a main difference and benefit of the proposed solution, since the approach does not rely on an explicit calculation of inclination using for example an accelerometer as inclinometer. This is a very important benefit since using the accelerometer as inclinometer directly, would require very accurate accelerometer with very small sensor errors as biases, else these would lead directly to big inclination errors. Instead, the solution uses the accelerometers only to predict over time velocity and position, which is then corrected by updates of the total station. Via these corrections, the method can estimate biases as states in-run accurately and seamlessly. For example, the solution could work with consumer grade IMU as e.g., Invensense 42688. This IMU has initial accelerometer bias of 20mg which would result in about 1 degree inclination error when the accelerometer would be used directly as inclinometer; this error in not acceptable for the application.

Another extremely important benefit is that in the approach an inclination can always be tracked, in static and also in dynamic conditions. This is crucial to simplify ease of use and customer workflows since the user can use a simple handheld pole without need for tripod to keep it stable.

With respect to the solution before described, it is noted that IMU dead reckoning operation is prone to errors. Results will stay accurate (e.g., mm and sub degree level needed for tilt pole compensation) for time intervals generally dependent on performance of overall sensors, before applying a further measurement update. For example, integration might stay accurate in position for some seconds before receiving a further position update by the total station, and in orientation for several tens of seconds before receiving an update by either the total station or the camera incident angle. A further benefit of the described system is therefore that continuous line of sight between the prism and the total station is not needed. Rather, the solution will offer accurate tracking and robustness to relock after losing line of sight, because of the IMU prediction. Additionally, position and heading updates can come at different times, with different update rates.

To further robustify the solution proposed above, in an alternative embodiment, one might use the camera data to additionally perform so called visual odometry, i.e., to calculate a change in position and orientation with respect to a previous position and orientation, for example by tracking the movement of features between different recorded image frames.

Visual odometry information can be further included in the aforementioned sensor fusion framework, e.g., as a position or orientation increment update, to give an exemplary formulation. While this alone would not provide an absolute orientation and position information (at least a position update of the total station would still be needed), visual odometry can be used to strongly limit the drift in the IMU prediction in case of prolonged absence of measurement updates from the total station. For example, accuracy in position might stay within mm for several tens of seconds using such updates; and accuracy in orientation might stay accurate within a fraction of degree for a minute or so, when additionally using such updates. Note that when using a monocular camera for visual odometry, position changes would be known apart from an unknown scale factor. Due to the use of IMU and position updates, the scale factor can be included as a state in the estimation problem and becomes easily observable via such updates.

Note that when using visual odometry in combination with IMU, position updates of total station, and total station incident angle updates, as described above, the system would be configured to provide maximum robustness. In an alternative implementation, however, the system may only use visual odometry, IMU and total station position updates. Heading would be generally observable only in case of prism movement, as discussed above; however, due to the addition of visual odometry, much higher robustness (strong limitation of drift) would be achieved vs the case of IMU and total station position measurements only. When desired, this can lead to a viable alternative embodiment, in which a potentially different implementation for the first sensor becomes possible (e.g., a narrower field of view camera not aimed at PLT, or a camera sensor not tuned to sense the infrared light of the total station).

The proposed sensor fusion framework allows one to use additional measurements in the estimation framework, when available, e.g., so called zero velocity or zero rotation updates could be used when a stillness condition is detected, allowing to further robustify the performance. The solution could be further integrated with other aiding technologies, e.g., (RTK)-GNSS, magnetometers, UWB radio-based localization, Lidar, stereo-camera systems, where measurements from such systems would be further included in the sensor fusion framework.

Similarly, and as mentioned before, the sensor fusion framework states could be expanded to also include (IMU) sensor biases, gain error, camera extrinsic or intrinsic, timing and synchronization errors, to mention a few, to increase overall performance and robustness.

While in the above the case of a camera sensor and ultra fisheye has been considered as means to measure heading with respect to the total station, other solutions could be considered. E.g., a multitude of narrower field of view camera systems, strip, or array of photodetectors, etc. to mention a few alternatives.

## Claims

1. A computer-implemented method for tracking a position and an orientation of a target object (12) in a worksite (11), in which the target object (12) and a surveying instrument (10) configured to emit a tracking light and measure a position of the tracked target object are deployed, the method being performed by a computer system and comprising:
▪ Predicting a position and an orientation of the target object (12) with respect to a previous position and a previous orientation by integrating in time of a 3D acceleration measured by an accelerometer sensing unit and of a 3D angular velocity measured by a gyroscope sensing unit, the accelerometer sensing unit and gyroscope sensing unit being attached to the target object (12),
▪ Correcting at least once the predicted position and orientation by using a first position of the target object (12) measured by the surveying instrument (10), and
▪ Further correcting over time, the corrected position and orientation with any of a further position of the target object (12) measured in time by the surveying instrument (10) and an incident angle measured in time by a first sensor, the first sensor being attached to the target object (12).

2. A computer program comprising instructions, which, when executed by a computer system, cause the computer system to carry out the method according to claim 1.

3. An apparatus comprising means for carrying out the method according to claim 1, the apparatus comprising:
▪ a surveying instrument (10) configured to emit a tracking light and to measure a position of the tracked target object (12),
▪ a first sensor attached to the target object (12) and configured to measure an incident angle of the tracking light from the surveying instrument (10),
▪ an accelerometer sensing unit attached to the target object (12) and configured to measure a 3D acceleration in time,
▪ a gyroscope sensing unit attached to the target object (12) and configured to measure a 3D angular velocity in time, and
▪ a computer system.
